# EUROPEAN PATENT SPECIFICATION

(11) **EP 1 938 946 B1**
(45) Date of publication and mention of the grant of the patent: **19.10.2011**
(21) Application number: 06767767.4
(22) Date of filing: 27.06.2006
(51) Int. Cl.: B29C 45/56, B29C 45/14, B29C 45/26, B29L 9/00, B29L 11/00

(54) **COMPRESSION MOLDING METHOD AND DEVICE THEREFOR**
FORMPRESSVERFAHREN UND VORRICHTUNG DAFÜR
PROCEDE DE MOULAGE PAR COMPRESSION ET SON DISPOSITIF

(30) Priority: 30.06.2005 JP 2005192634
(43) Date of publication of application: 02.07.2008
(73) Proprietor: NISSHA PRINTING CO., LTD., Nakagyo-ku Kyoto-shi Kyoto 604-8551 (JP)
(72) Inventor: TAKEUCHI, Shinya Nissha Printing Co., Ltd., Kyoto-shi, Kyoto 604-8551 (JP); FUJIMURA, Toshitsugu Nissha Printing Co., Ltd., Kyoto-shi, Kyoto 604-8551 (JP)
(74) Representative: Müller-Boré & Partner Patentanwälte
(86) International application number: PCT/JP2006/313190
(87) International publication number: WO 2007/004598

(56) References cited:
- WO-A-2006/008010
- DE-A1- 19 823 200
- JP-A- 5 092 443
- JP-A- 7 164 475
- JP-A- 11 034 247
- JP-A- 11 179 769
- JP-A- 11 179 769
- JP-A- 58 007 330
- JP-A- 2000 355 027
- JP-A- 2000 355 027
- JP-A- 2004 025 515
- US-B1- 6 478 562

## Description

The present invention relates to a compression molding method using a core compression mold and a device therefor.

Conventionally, a core compression mold is used for molding spectacle lenses, optical lenses and the like.

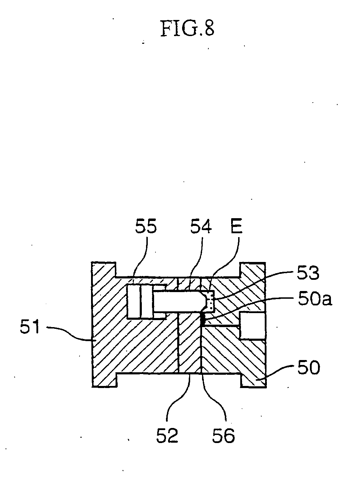

Such a kind of mold consists of a fixed mold 50, a movable mold 51 and a runner plate 52 interposed between them, as shown in Fig. 8.

In the fixed mold 50, a runner 50a and a mold cavity 53 communicating with the runner 50a are formed.

In the movable mold 51, a core 54 is provided penetrating through the runner plate 52 at a position opposite to the mold cavity 53. The core 54 is adapted to move back and forth relative to the mold cavity 53 corresponding to the movement of a core cylinder 55.

In the case of carrying out molding by using the core compression mold, clamping is performed in a state that the core 54 is retreated to thereby cause a large clamping force to act on a parting face 56 where the fixed mold 50 and the runner plate 52 contact each other.

Next, molten resin from an injector is injected into the mold cavity 53 through the runner 50a.

Then, the core 54 is advanced by operating the core cylinder 55 so as to compress the molten resin inside the mold cavity 53 to thereby produce a molded product E (see, for example, Japanese Patent Laid-Open Publication No. 11-179769). A method of resin molding and a resin molding machine is described in US-patent 6,478,562.

In the core compression mold, however, sliding surfaces between the core 54 and the runner plate 52 may be worn to thereby cause so-called "scoring".

Scoring is classified according to the causes into a) abrasive wear which is easily caused if materials of the sliding mold components include differences in hardness, b) adhesive wear in which protrusions of mold components collide against each other whereby adhesion is easily caused in the part of the hardest contact, and the adhesion is dropped to thereby form abrasion powders, and c) fatigue wear in which mold components are tired and worn, for example.

Scoring is caused due to various causes as described above, and if abrasion powders are contaminated in molded products, they should be disposed as waste, causing a drop in the product yield and also damaging the mold. Further, if a clearance of the core sliding part is large, there is a problem that resin is immersed into the core sliding part to thereby cause burrs.

The present invention has been developed considering the problems in the conventional compression molding method using a core compression mold as described above. It is therefore an object of the present invention to provide a compression molding method and a device therefor, capable of preventing contamination of abrasion powders caused by scoring to thereby improve the product yield, and further increasing the service life of the core compression mold.

A compression molding method of the present invention to achieve the above mentioned object is a method including a fixed mold and a movable mold arranged opposite each other as characterized in the claims, comprising the steps of: contacting a slide board connected with a movable die plate on the movable mold side via a spring with a parting face of the fixed mold by the spring force;further advancing the movable mold after supplying resin into a cavity inside the mold,; and compressing and molding the resin filled in the cavity by a core, provided in the movable mold, penetrating through the slide board. The method is **characterized in that** a thermoplastic resin film is disposed between the fixed mold and the movable mold, and one surface of the resin in the cavity is compressed by the core via the thermoplastic resin film.

According to the compression molding method of the present invention, when the resin film is interposed between the fixed mold and the movable mold and the resin is supplied into the cavity in a state where the core is recessed, the supplied resin presses the resin film to adhere to the core. Then, when the core advances while the spring shrinks by further advancing the movable mold, the molded resin is compressed by the core which is covered with the thermoplastic resin film. That is, resin molding is performed without being influenced by abrasion powders generated in the sliding part since the thermoplastic resin film is provided between the sliding core and the molded resin as a divider.

In the compression molding method, it is preferable to use a polyester film having a thickness of 20 to 200gm as the thermoplastic resin film.

In the compression molding method, a base film of a transfer film on which a design is formed may be used as the thermoplastic resin film.

In such a case, the design can be transferred onto the decorating face by arranging the transfer film such that the design faces the fixed mold side, and after positioning the resin to be supplied into the cavity and the design of the transfer film, supplying the resin into the cavity in the mold and compressing the decorating face of the resin filled in the cavity by the core via the transfer film. Thereby, it is possible to realize preventing abrasion powders generated in the core sliding part from being mixed, as well as transferring the design.

In the compression molding method, it is preferable to supply the resin into the cavity after causing the thermoplastic resin film disposed between the fixed mold and the movable mold to be adsorbed to the compression face of the core.

Further, a compression molding device of the present invention as characterized in the claims is provided. Said device is a device having a fixed mold and a movable mold arranged opposite each other, in which a slide board connected with a movable die plate on the movable mold side via a spring is contacted with a parting face of the fixed mold by a spring force, and the movable mold is further advanced after resin is supplied into a cavity inside the mold, and the resin filled in the cavity is compressed and molded by a core, provided in the movable mold in state of penetrating through the slide board. The device is characterized as to be configured such that one surface of the resin in the cavity and the core is divided with a thermoplastic resin film at a time of compression molding.

In the compression molding device, the thermoplastic resin film may be formed of a resin film in a band shape, and may be configured so as to be unwound from a roll and to pass through the mold intermittently.

According to the compression molding method and the compression molding device of the present invention, it is possible to prevent contamination of abrasion powders generated by scoring to thereby improve the product yield, and also to increase the service life of the mold.
Fig. 1 is a configuration diagram of a mold used in a compression molding method according to the present invention;
Figs. 2a to 2e are process diagrams for explaining the compression molding method according to the present invention;
Fig. 3 is a cross-sectional view of a transfer film used in the present invention;
Figs. 4a to 4e are process diagrams for explaining a compression molding method using a transfer film;
Figs. 5a and 5b are pictures of molded product molded by means of a conventional compression molding method, in which Fig. 5a is a micrograph taken with a magnification rate of 50 times, and Fig. 5b is a micrograph taken with a magnification rate of 500 times;
Fig. 6 is a micrograph in which Fig. 5b is further magnified 3500 times;
Figs. 7a and 7a are pictures of a molded product molded by means of the compression molding method according to the present invention, in which Fig. 7a is a micrograph taken with a magnification rate of 50 times, and Fig. 7a is a micrograph taken with a magnification rate of 500 times; and
Fig. 8 is a sectional view showing the configuration of a conventional compression mold.

Hereinafter, the present invention will be explained in detail based on an embodiment shown in the drawings.

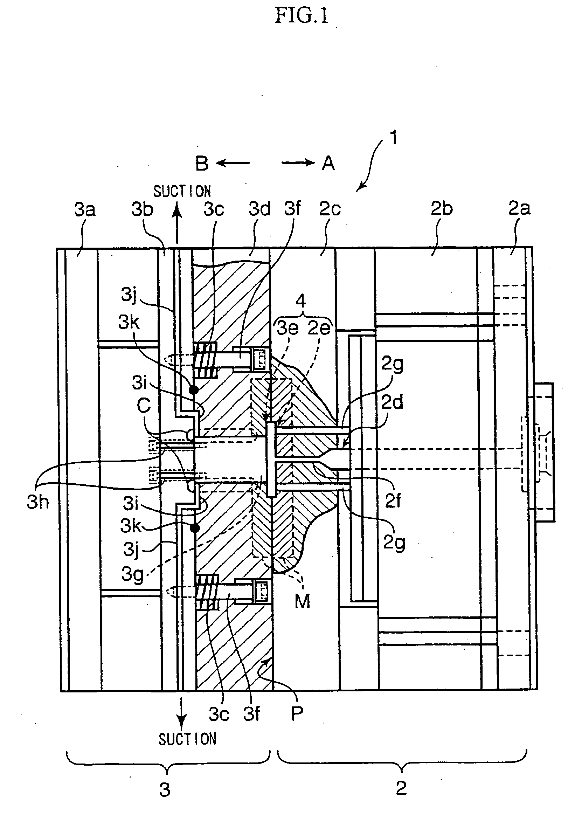

Fig. 1 shows the configuration of a core compression mold (hereinafter abbreviated as a mold) used in a compression molding method according to the present invention.

In Fig. 1, a mold 1 includes a fixed mold 2 and a movable mold 3. A mold mounting board 2a of the fixed mold 2 is provided with a fixed die plate 2c via a spacer block 2b, and the fixed die plate 2c is provided with a hot runner 2d.

In a dented part defined by the fixed die plate 2c and a slide board 3d described later, a nest block M divided into left and right parts by a parting face P is fitted. On the fixed mold side of the nest block M, one side of a cavity 4 into which molten resin is filled is formed as a first cavity 2e, to which a nozzle 2f of the hot runner 2d is communicated. Note that the reference numeral 2g denotes an ejector pin. Further, an inclined pin (not shown) for forming an undercut part in a pawl shape may be provided if required. This is due to the fact that an inclined pin and a core 3g described later will not interfere with each other in the present configuration.

The movable mold 3 is arranged opposite the fixed mold 2, and a mold mounting base 3a of the movable mold 3 is provided with a movable die plate 3b.

The movable die plate 3b is provided with the slide board 3d via springs 3c. In the slide board 3d, a second cavity 3e is formed opposite the first cavity 2e. The reference numeral 3f indicates a compression allowance adjusting bolt which is arranged coaxially with the spring 3c.

Further, the slide board 3d is provided with the core 3g penetrating through the slide board 3d in a left and right direction.

The back end of the core 3g is fixed to the movable die plate 3b via core fixing bolts 3h. When the slide board 3d is moved in a direction of the arrow A against the urging force of the springs 3c and 3d to closely adhere to the fixed die plate 2c, the slide board 3d is retreated in a direction of the arrow B whereby the core 3g advances relatively, whereby the molten resin filled in the cavity 4 is compressed.

Note that the compression range by the core 3g may be a part or the whole of the cavity 4.

A thermoplastic resin film (hereinafter abbreviated as a film), described later, is disposed between the fixed die plate 2c and the slide board 3d of the mold 1. The film is formed of one in a band shape unwound from a roll. Each time compression molding is carried out, it moves intermittently with a predetermined length so as to be fed into the mold 1. The film provided for molding is to be sent outside the mold after released from the mold and wound up by a wind-up roll (not shown).

Further, in the movable mold 3, suction passages 3i and 3j are formed, communicating with a gap in the core sliding part C. The suction passage 3j penetrates through the movable die plate 3b and connects with a vacuum pump (not shown) outside the movable mold 3. Thereby, when suction is carried out through the suction passages 3i and 3j, the film disposed between the fixed mold 2 and the movable mold 3 can adhere closely to the compression face of the core 3g, so as to prevent wrinkles from being caused on the resin surface to be molded. Note that the reference numeral 3k, in the Figure, denotes a seal member consisting of an O ring, for example, which enables suction even if the movable die plate 3b and the slide board 3d are separated.

As a material of the film, a heat-resistant polyester film, especially PET (polyethylene terephthalate) is preferable to be used specifically, but it is not limited to this material. A single-layer film selected from polycarbonate resin, polyamide resin, polyimide resin, polyester resin, acrylate resin, olefin resin, urethane resin, acrylonitrile-butadien-styrene resin, vinyl chloride resin and the like, or a laminated film or a copolymer film made of not less than two kinds of resins selected from those mentioned above can be used.

When the molten resin inside the cavity 4 is compressed by the core 3g, breaking force is acted on the film. Therefore, the thickness of the film must be selected to be able to counter the breaking force.

As a film thickness capable of countering the breaking force, one having 20µm or more may be used, but since a resin thickness to be formed is affected if the thickness exceeds 200µm, it is preferable to select the thickness in a range from 20 to 200µm.

Furthermore, it is preferable to select the thickness in a range from 20 to 100µm for high-accuracy molding.

As molten resin to be filled in the mold 1, general-purpose resin such as polystyrene-type resin, polyolefin-type resin, ABS resin, AS resin, AN resin or the like is shown. In addition, general-purpose engineering resin such as polyphenylene oxide polystylene resin, polycarbonate-type resin, polyacetal-type resin, acrylic resin, polycarbonate modified polyphenylene ether resin, and poly butylene terephthalate resin, and super engineering resin such as polysulfone resin, polyphenylene-sulfide-type resin, polyphenylene-oxide-type resin, polyallylate resin, polyether imide resin, polyimide resin, liquid crystal polyester resin, and polyallyl type heat-resistant resin may be used. Note that a composite resin to which a reinforcing material such as glass fiber or inorganic filler is added is also included as the molted resin.

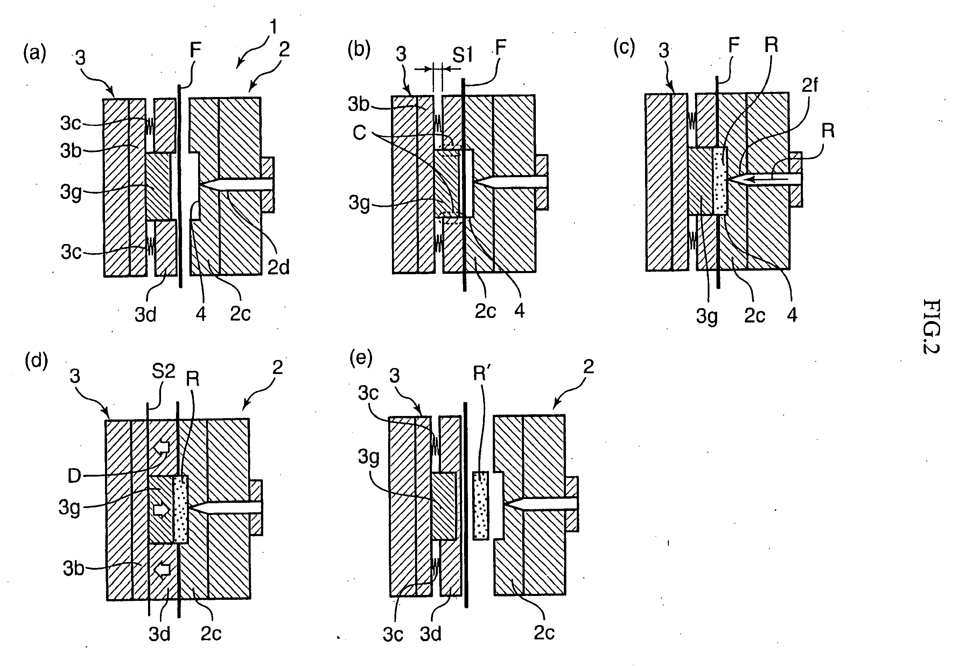

Next, a compression molding method using a film will be described with reference to the principle diagrams of Figs. 2a to 2e.

In Figs. 2a to 2e, step (a) shows a film disposing state, step (b) shows a mold touching state, step (c) shows a mold resin injecting/filling state, step (d) shows a compressing state, and step (e) shows a mold removing state, respectively.

In step (a), a film F is inserted in between the fixed mold 2 and the slide board 3d of the movable mold 3.

Next, as shown in step (b), the movable mold 3 is moved to the fixed mold 2 side, and the slide board 3d is contacted with the fixed die plate 2c by the spring force. The compression allowance of the springs 3c and 3c is set to 0.3mm, for example.

Then, as shown in step (c), molten resin R is filled in the cavity 4 from the nozzle 2f. At this time, the film F is closely contacted to the compression face of the core 3g.

Then, as shown in step (d), the movable mold 3 is moved such that the compression allowance S2 of the springs becomes 0mm, thereby the slide board 3d is closely contacted with the movable die plate 3b.

At this time, corresponding to the slide board 3d being retreated in a direction of the arrow D, the core 3g advances to a direction opposite to the direction of the arrow D relatively, and the end face of the front side (compressed face) presses the molten resin R via the film F.

Then, when the molten resin R is hardened, the movable mold 3 is separated from the fixed mold 2 so as to separate a molded product R' from the mold, as shown in step (e).

In the compression molding, the film F is interposed between the core 3g and the resin molded surface, so even if abrasion powders are generated in the core sliding part C where the core 3g and the slide board 3d slidingly move to each other, it is possible to prevent the abrasion powders from being contaminated in the molded resin R.

As described above, by performing compression molding in a state where the film F is interposed between the fixed mold 2 and the movable mold 3, it is possible to surely solve a reduction in yield affected by abrasion powders generated in the core sliding part C.

Further, in the compression molding, when the film F is softened with heat, it also becomes to have adherence at the same time. Therefore, abrasion powders easily adhere to the heated film F, and when the film F is sent outside the compression mold after separated from the mold, the abrasion powders will be discharged from the mold 1 together with the film F. Consequently, each time compression molding is carried out, abrasion powders generated in the core sliding part C are discharged outside the compression mold 1, whereby the mold service life can be longer.

Moreover, since it is possible to prevent resin from being intruded into the core sliding part C, occurrence of burrs can be solved.

The film F used in the above-described embodiment may be substituted with a transfer film. In such a case, it is possible to solve a reduction in the yield caused by abrasion powders and also to decorate the molded product at the same time.

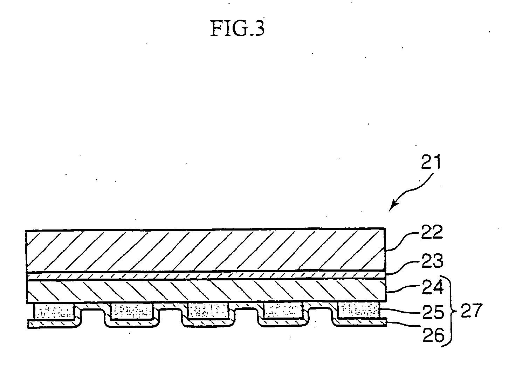

Fig. 3 shows the configuration of a transfer film.

A transfer film 21 consists of a base film 22, a separation layer 23, a peel-off layer 24, a design layer 25, and an adhesive layer 26. Note that in the explanation below, the peel-off layer 24, the design layer 25 and the adhesive layer 26 may be collectively called as a decorative layer 27.

As a material of the base film 22, PET (polyethylene terephthalate) excellent in heat resistance is shown, but it is not limited to this material. A single-layer film selected from polycarbonate resin, polyamide resin, polyimide resin, polyester resin, acrylic resin, olefin resin, urethane resin, acrylonitrile-butadien-styrene resin, vinyl chloride resin and the like, or a laminated film or a copolymer film made of not less than two kinds of resin selected from those mentioned above can be used.

As for the thickness of the base film 22, it is confirmed that one having a thickness of 38µm will not brake up to the compression amount of 0.3mm, and one having a thickness of 50µm will not brake up to the compression amount of 0.5mm. Therefore, when carrying out inmold printing by using the mold 1, the thickness of the base film 22 can be decided within a rage from 38 to 50µm corresponding to the compression amount, but when considering the handling ability, it is preferable to use one having 38µm.

The peel-off layer 24 forms the outermost face after the design is transferred and the base film 22 is peeled, and serves as a protective film for the design.

The materials of the peel-off layer 24 include acrylic-type resin, nitrocellulose-type resin, polyurethane-type resin, chlorinated rubber-type resin, vinyl chloride-vinyl acetate copolymer type resin, polyamide-type resin, polyester-type resin, epoxy-type resin, polycarbonate-type resin, olefin-type resin, and acrylonitrile-butadien-styrene resin. The film thickness of the peel-off layer 24 is preferably in a range of 0.5 to 50µm.

The separation layer 23 is a layer in which surface processing is carried out to the base film 22. This is for smoothing peeling between the base film 22 and the peel-off layer 24. Therefore, the separation layer 23 may be omitted if peeling can be performed only with the base film 22 and the peel-off layer 24. The material of the separation layer 23 may be made of one same as that of the peel-off layer 24.

The design layer 25 including characters, symbols, patterns and coating patterns is enclosed between the peel-off layer 24 and the adhesive layer 26. The materials of the design layer 25 include acrylic-type resin, nitrocellulose-type resin, polyurethane-type resin, chlorinated rubber type resin, vinyl chloride-vinyl acetate copolymer type resin, polyamide-type resin, polyester-type resin, and epoxy-type resin.

The design layer 25 is not limited to the resin described above. It may consist of a metallic film such as aluminum, chrome, copper, nickel, indium, tin, and silicon oxide by vacuum vapor deposition, plating or the like. Note that the film thickness of the design layer 25 is preferably set in a range from 0.5 to 50µm in order to obtain sufficient design property. In the case of consisting of a metallic film layer, a range from 50 Å to 1200Å is preferable.

The adhesive layer 26 is for attaching the design layer 25 to the surface of a molded product. The materials thereof include acrylic-type resin, nitrocellulose-type resin, polyurethane-type resin, chlorinated rubber type resin, vinyl chloride-vinyl acetate copolymer type resin, polyamide-type resin, polyester-type resin, epoxy-type resin, polycarbonate-type resin, olefin-type resin, and acrylonitrile-butadien-styrene resin. The film thickness of the adhesive layer 26 is preferably in a range of 0.5 to 50µm.

The design layer 25 can be printed on the peel-off layer 24 by well-known gravure printing.

The gravure printing is printing in which ink is held in fine recesses of a plate, and printing is performed by transferring the ink to the peel-off layer 24 with a pressure of an impression cylinder. Ink to be used is basically of solvent type, which has an advantage that the adhesive property is excellent even with respect to a plastic film with bad wettability such as the peel-off layer 24.

Further, since the surface of a plastic film does not absorb ink and is very smooth, it is possible to create a precise design by utilizing the gravure printing with ink excellent with the peel-off layer 24.

Note that a method of forming the design layer 25 on the peel-off layer 24 is not limited to the gravure printing. For example, any printing method capable of attaching the design layer 25 to the peel-off layer 24 such as offset printing, screen printing, coating or dipping is applicable.

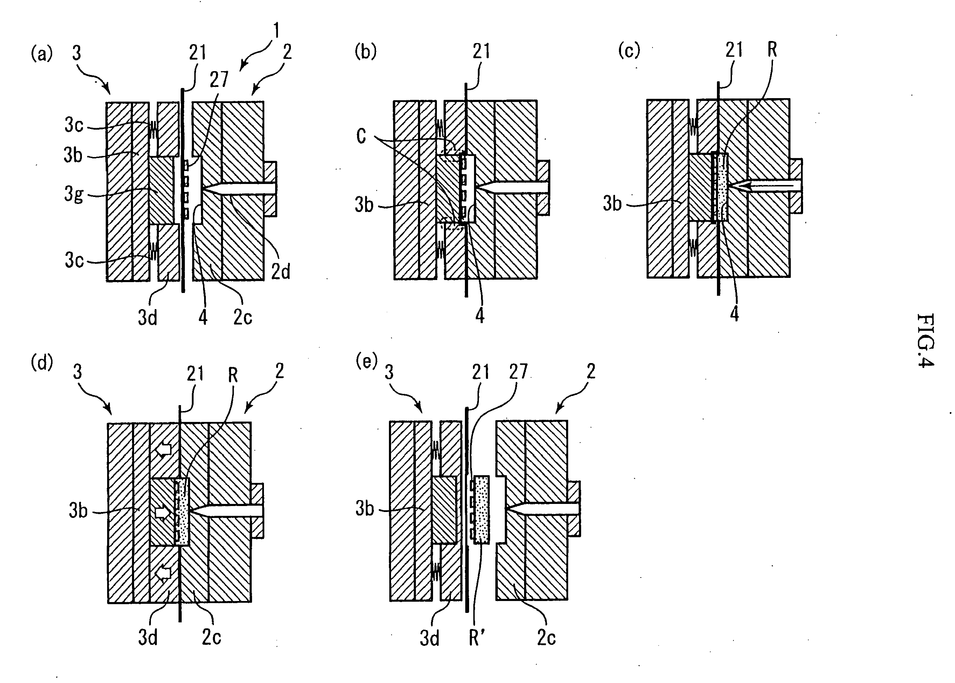

Fig. 4 shows a method of performing inmold printing by using the mold 1 shown in Fig. 2 and the transfer film 21.

In the description below, same constitutional elements as those in Fig. 2 are denoted by the same reference numerals and the explanation thereof is omitted.

In Figs. 4a to 4e, step (a) shows a state of positioning the transfer film 21, step (b) shows a mold contacting state, step (c) shows a mold resin injecting/filling state, step (d) shows a compressing state, and step (e) shows a mold removing state, respectively.

In the inmold printing, the transfer film 21 passes between the fixed mold 2 and the movable mold 3. The transfer film 21 passing through the both molds is disposed such that the decorative layer 27 faces the fixed mold 2.

In the fixed die plate 2c, the hot runner 2d for injecting transparent resin is formed toward the transfer film 21. The hot runner 2d forming part is connected with a nozzle of an injection molding device not shown.

As shown in step (a), the transfer film 21 is fed between the fixed mold 2 and the movable mold 3 to thereby perform positioning. That is, positioning is performed such that the transparent resin formed by being injected into the cavity 4 and the design formed on the transfer film 21 are arranged in a prescribed manner.

As shown in step (b), when the positioning of the transfer film 21 is completed, the movable mold 3 is moved to the fixed mold 2 side, and the slide board 3d is contacted with the fixed die plate 2c by the spring force. The compression allowance of the springs 3c and 3c is set to 0.3mm, for example.

As shown in step (c), the transparent resin R is injected in the cavity 4.

Then, as shown in step (d), the movable mold 3 is moved so as to set the compression allowance of the spring 3c to 0mm such that the slide board 3d and the movable die plate 3b contact closely.

Then, after the injected transparent resin is hardened, the fixed mold 2 and the movable mold 3 are opened as shown in step (e), and the base film 22 is peeled off since the peel-off layer 24 (see Fig. 3) is provided, so the molded product R' remains on the fixed die plate 2c side. On the molded surface of the molded product R', the design is transferred and integrated with the molded product R'. Then, the molded product R' is separated from the fixed die plate 2c.

In this way, by performing inmold printing with the transfer film 21 being interposed between the fixed mold 2 and the movable mold 3, it is possible to prevent a reduction in yield affected by abrasion powders generated in the core sliding part C while performing decoration by transfer simultaneously.

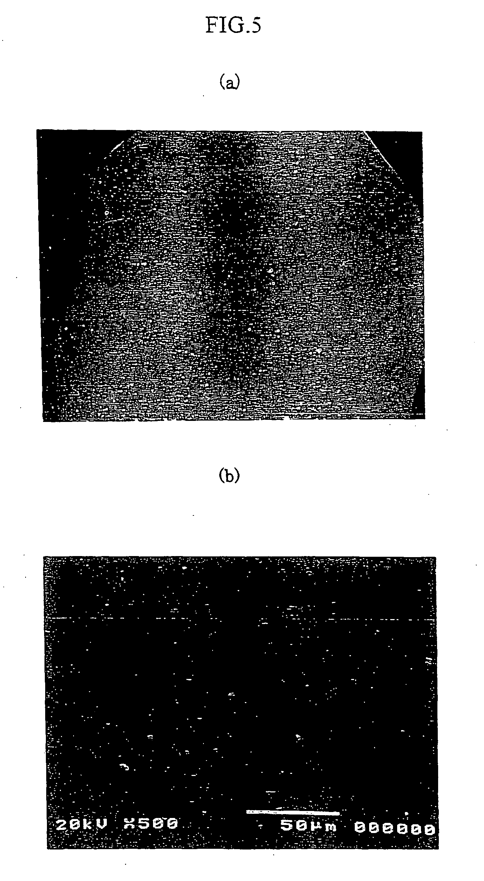

Figs. 5a and 5b show a surface (rear face) of a molded product after conventional compression molding, captured by an optical microscope, in which Fig. 5a shows one magnified 50 times, and Fig. 5b shows one magnified 500 times.

As obvious from Fig. 5a, thousands of white tarnishes caused by spots are generated on the surface of the molded product, and as obvious from Fig. 5b, the spots generate craters.

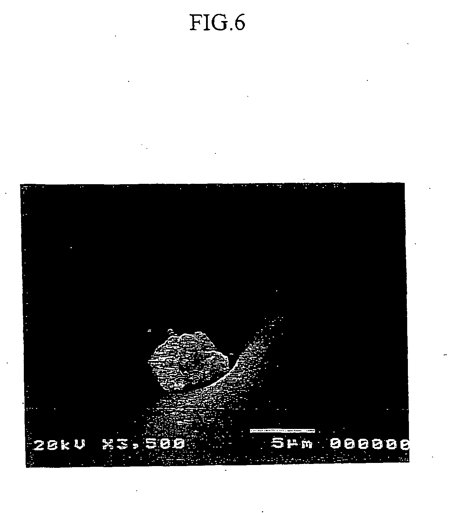

Fig. 6 shows the crater further magnified 3500 times, in which a foreign article generating the crater is clearly shown. Through analysis of the foreign particle, Fe+Cr is detected and it is confirmed as an abrasion powder.

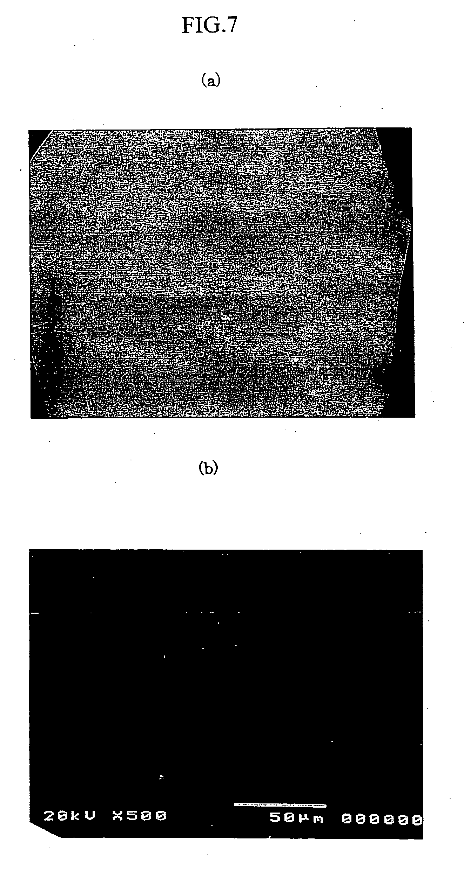

On the other hand, Figs. 7a and 7b show a surface (rear face) of a molded product molded by the compression molding method of the present invention, captured under the same conditions.

As obvious from Fig. 7a, white tarnishes are solved completely, and as obvious from Fig. 7b, craters are seldom generated.

As described above, by performing compression molding with the film F or the transfer film 21 being interposed between the fixed mold 2 and the movable mold 3, it is confirmed that a molded product can be manufactured without being affected by abrasion powders generated in the core sliding part C.

The compression molding method of the present invention is preferable for thin-wall moldings and optical moldings using transparent resin, particularly.

Specific examples of thin-wall moldings include transparent display panels of mobile telephones and PDA (Personal Digital Assistances).

Specific examples of optical moldings include plastic lens components provided in cameras of mobile telephones, plastic lens components used in other electronic equipment, plastic lens components of optical equipment, and optical discs as recording media such as CD (Compact Disc) and DVD (Digital Versatile Disk).

The present invention is preferable for forming molded products, that is, spectacle lenses and optical lenses in particular, in which molding must be carried out while preventing abrasion powders generated from the sliding face of mold components from being contaminated in the products.

## Claims

1. A compression molding method, including a fixed mold (2) and a movable mold (3) arranged opposite each other, comprising the steps of
contacting a slide board (3d) connected with a movable die plate (3b) on a movable mold (3) side via a spring, with a parting face of the fixed mold (2) by a spring force;
further advancing the movable mold (3) after supplying resin (R) into a cavity (4) inside the mold (1); and
compressing and molding the resin (2) filled in the cavity (4) by a core (3g), provided in the movable mold (3), penetrating through the slide board (3d), wherein
a thermoplastic resin film is disposed between the fixed mold (2) and the movable mold (3),
sealing the movable mold (3) and the slide board (3d) which are in a separated state by a seal member (3k),
the thermoplastic resin film being adhered to the compression face of the core (3g) by suction through a gap in a core sliding part (C),
thereby one surface of the resin in the cavity (4) being compressed by the core (3g) via the thermoplastic resin film.

2. The compression molding method according to claim 1, wherein a polyester film having a thickness of 20 to 200µm is used as the thermoplastic resin film.

3. The compression molding method according to claim 1, wherein a base film (22) of a transfer film (21) having a design is used as the thermoplastic resin film and arranged such that the design faces a fixed mold (2) side, the resin (2) is supplied into the cavity (4) inside the mold (1), a decorating face of the resin filled in the cavity (4) is compressed by the core (3g) via the transfer film (21), and the design is transferred onto the decorated face.

4. The compression molding method according to claim 1, wherein the thermoplastic resin film is formed of a resin film in a band shape, and is configured so as to be unwound from a roll and to pass through the mold (1) intermittently.

5. A compression molding device including
a fixed mold (2) and a movable mold (3) arranged opposite each other,
a slide board (3d) connected with a movable die plate (3b) on a movable mold (3) side via a spring and contacted with a parting face of the fixed mold (2) by the spring,
a core (3g) provided in the movable mold (3), penetrating through the slide board (3d) for compressing the resin (R) filled in the cavity (4) when the movable mold (3) is further advanced, wherein
the device is configured such that one surface of the resin (R) in the cavity (4) and the core (3g) is provided with a thermoplastic resin film at a time of compression molding, and **characterised by** further including:
a seal member (3k), which enables suction even if the movable die plate (3b) and the slide board (3d) are separated, and a gap in a core sliding part (C) for absorbing the thermoplastic resin film to the compression face of the core (3g) by suction.

6. The compression molding device according to claim 5, wherein the device includes a suction passage (3i, 3j) communicating with the gap in the core sliding part (C) inside the movable mold (3), and is configured such that the suction passage (3i, 3j) is connected with a vacuum pump, and the thermoplastic resin film disposed between the fixed mold (2) and the movable mold (3) is attached closely to the compression face of the core (3g).

## Patentansprüche

1. Formpreßverfahren, einschließlich eine fixierte Form (2) und eine bewegliche Form (3), angeordnet entgegengesetzt voneinander, umfassend die Schritte:
das Inkontaktbringen einer Gleitplatte (3d), verbunden mit einer beweglichen Düsenplatte (3b) auf einer Seite der beweglichen Form (3) über eine Feder, mit einer Trennfläche der fixierten Form (2) durch eine Federkraft,
das weiter Vorschieben der beweglichen Form (3) nach Zuführen eines Harzes (R) in einen Hohlraum (4) innerhalb der Form (1), und
das Pressen und Formen des in den Hohlraum (4) gefüllten Harzes (R) durch einen Kern (3g), angeordnet in der beweglichen Form (3), eindringend durch die Gleitplatte (3d),
wobei ein thermoplastischer Harzfilm zwischen der fixierten Form (2) und der beweglichen Form (3) aufgebracht wird,
das Verschließen der beweglichen Form (3) und der Gleitplatte (3d), welche in einem getrennten Zustand durch ein Siegelelement (3k) sind,
wobei der thermoplastische Harzfilm an die Preßfläche des Kerns (3g) durch Ansaugen über einen Spalt bzw. Aussparung in einem Kerngleitteil (C) angehaftet wird,
wodurch eine Oberfläche des Harzes in dem Hohlraum (4) durch den Kern (3g) über den thermoplastischen Harzfilm gepreßt wird.

2. Preßformverfahren gemäß Anspruch 1, wobei ein Polyesterfilm mit einer Dicke von 20 bis 200 µm als der thermoplastische Harzfilm verwendet wird.

3. Preßformverfahren gemäß Anspruch 1, wobei ein Basisfilm (22) eines Transferfilms (21) mit einem Muster als der thermoplastische Harzfilm verwendet wird und derart angeordnet wird, daß das Muster einer Seite der fixierten Form (2) gegenüberliegt, das Harz (R) in den Hohlraum (4) innerhalb der Form (1) zugeführt wird, eine dekorierende Fläche des in den Hohlraum (4) gefüllten Harzes durch den Kern (3g) über den Transferfilm (21) gepreßt wird und das Muster auf die dekorierte Fläche übertragen wird.

4. Preßformverfahren gemäß Anspruch 1, wobei der thermoplastische Harzfilm aus einem Harzfilm in einer Bandform gebildet wird und derart konfiguriert ist von einer Walze abgerollt zu werden und durch die Form (1) periodisch geleitet zu werden.

5. Preßformvorrichtung, einschließend:
eine fixierte Form (2) und eine bewegliche Form (3), entgegengesetzt voneinander angeordnet,
eine Gleitplatte (3d), verbunden mit einer beweglichen Düsenplatte (3b) auf einer Seite der beweglichen Form (3) über eine Feder und in Kontakt mit einer Trennfläche der fixierten Form (2) über die Feder,
einen Kern (3g), angeordnet in der beweglichen Form (3), eindringend durch die Gleitplatte (3d) zum Pressen des in den Hohlraum (4) gefüllten Harzes (R),
wenn die bewegliche Form (3) weiter vorgerückt ist, wobei die Vorrichtung derart konfiguriert ist, daß eine Oberfläche des Harzes (R) in dem Hohlraum (4) und dem Kern (3g) mit einem thermoplastischen Harzfilm zu einem Zeitpunkt des Preßformens versehen ist, und **gekennzeichnet durch** weiter einschließend:
ein Siegelelement (3k), welches Ansaugen ermöglicht, sogar wenn die bewegliche Düsenplatte (3b) und die Gleitplatte (3d) getrennt sind, und
einen Spalt in einem Kerngleitteil (C) zum Absorbieren des thermoplastischen Harzfilms an die Preßfläche des Kerns (3g) **durch** Ansaugen.

6. Preßformvorrichtung gemäß Anspruch 5, wobei die Vorrichtung eine Ansaugpassage (3i, 3j), welche mit dem Spalt in dem Kerngleitteil (C) in der beweglichen Form (3) kommuniziert, einschließt und derart konfiguriert ist, daß die Ansaugpassage (3i; 3j) mit einer Vakuumpumpe verknüpft ist und der thermoplastische Harzfilm, aufgebracht zwischen der fixierten Form (2) und der beweglichen Form (3), eng an die Preßfläche des Kerns (3g) gebunden ist.

## Revendications

1. Procédé de moulage par compression, comportant un moule fixe (2) et un moule mobile (3) agencés l'un à l'opposé de l'autre, comprenant les étapes de :
mise en contact d'un panneau coulissant (3d) couplé à une plaque de matrice mobile (3b) d'un côté de moule mobile (3) par l'intermédiaire d'un ressort, avec une surface de séparation du moule fixe (2) sous l'action d'un effort élastique ;
poursuite de l'avance du moule mobile (3) après introduction de résine (R) dans une cavité (4) à l'intérieur du moule (1) ; et
compression et moulage de la résine (R) introduite dans la cavité (4) par un noyau (3g), agencé dans le moule mobile (3), pénétrant à travers le panneau coulissant (3d), dans lequel
un film de résine thermoplastique est disposé entre le moule fixe (2) et le moule mobile (3) ;
le moule mobile (3) et le panneau coulissant (3d) qui sont dans un état séparé par un élément d'étanchéité (3k) sont scellés ;
le film de résine thermoplastique étant collé sur la face de compression du noyau (3g) par aspiration à travers un intervalle dans une partie coulissante de noyau ;
de telle sorte qu'une surface de la résine dans la cavité (4) est compressée par le noyau (3g) par l'intermédiaire du film de résine thermoplastique.

2. Procédé de moulage par compression selon la revendication 1, dans lequel un film en polyester présentant une épaisseur de 20 à 200 µm est utilisé pour le film de résine thermoplastique.

3. Procédé de moulage par compression selon la revendication 1, dans lequel un film de base (22) d'un film de transfert (21) présentant un dessin est utilisé pour le film en résine thermoplastique et agencé de telle sorte que le dessin fait face au côté de moule fixe (2), la résine (R) est délivrée dans la cavité (4) à l'intérieur du moule (1), une face décorative de la résine introduite dans la cavité (4) est compressée par le noyau (3g) par l'intermédiaire du film de transfert (21), et le dessin est transféré sur la face décorée.

4. Procédé de moulage par compression selon la revendication 1, dans lequel le film de résine thermoplastique est formé d'un film de résine en une forme de bande, et est configuré de manière à être déroulé à partir d'un rouleau et à passer à travers le moule (1) de manière intermittente.

5. Dispositif de moulage par compression comportant
un moule fixe (2) et un moule mobile (3) agencés l'un à l'opposé de l'autre,
un panneau coulissant (3d) couplé à une plaque de matrice mobile (3b) d'un côté de moule mobile (3) par l'intermédiaire d'un ressort et mis en contact avec une face de séparation du moule fixe (2) par le ressort,
un noyau (3g) agencé sur le moule mobile (3), pénétrant à travers le panneau coulissant (3d) afin de comprimer la résine (R) introduite dans la cavité (4) lorsque le moule mobile (3) est avancé davantage, dans lequel
le dispositif est configuré de telle sorte qu'une surface de la résine (R) dans la cavité (4) et le noyau (3g) est recouverte d'un film de résine thermoplastique au moment du moulage par compression, et **caractérisé par le fait qu'**il comporte, en outre :
un élément d'étanchéité (3k) qui permet l'aspiration même si la plaque de matrice mobile (3b) et le panneau coulissant (3d) sont séparés, et
un intervalle sur une partie coulissante de noyau (C) destiné à absorber le film de résine thermoplastique sur la face de compression du noyau (3g).

6. Dispositif de moulage par compression selon revendication 5, dans lequel le dispositif comporte un passage d'aspiration (3i, 3j) communiquant avec l'intervalle sur la partie coulissante de noyau (C) à l'intérieur du moule mobile (3), et est configuré de telle sorte que le passage d'aspiration (3i, 3j) est raccordé à une pompe à vide, et le film de résine thermoplastique disposé entre le moule fixe (2) et le moule mobile (3) est fixé étroitement sur la face de compression du noyau (3g).
